# EUROPEAN PATENT SPECIFICATION

(11) **EP 2 073 092 B1**
(45) Date of publication and mention of the grant of the patent: **26.05.2010**
(21) Application number: 08169678.3
(22) Date of filing: 30.11.2007
(51) Int. Cl.: G06F 1/16, H04M 1/02, H04M 1/73

(54) **Portable electronic apparatus having more than one display area, and method of controlling a user interface thereof**
Tragbare elektronische Vorrichtung mit mehr als einem Anzeigebereich und Verfahren zur Steuerung einer Benutzerschnittstelle dafür
Appareil électronique portable ayant plus d'un seul domaine d'affichage, et procédé de contrôle d'une interface d'utilisateur

(43) Date of publication of application: 24.06.2009
(62) Divisional of application: 07121981.0
(73) Proprietor: Telefonaktiebolaget L M Ericsson (publ), 164 83 Stockholm (SE)
(72) Inventor: Nader, Ali, 214 25, Malmö (SE)
(74) Representative: Bratt, Hanna Catharina

(56) References cited:
- US-A1- 2004 252 913
- US-A1- 2005 104 848
- US-A1- 2005 140 565
- US-A1- 2007 188 450
- US-A1- 2007 232 336

## Description

### Technical Field

The present invention relates to the field of portable electronic equipment, and in particular to a portable electronic apparatus of a kind having more than one display area. The invention also relates to a method of controlling a user interface of such a portable electronic apparatus.

### Background

Portable electronic equipment of course exists in many different types. One common example is a mobile terminal, such as a mobile telephone for a mobile telecommunications system like GSM, UMTS, D-AMPS, CDMA2000, FOMA or TD-SCDMA. Other examples include personal digital assistants (PDAs), portable media players (e.g. DVD players), palmtop computers, digital cameras, game consoles, navigators, etc. A mobile terminal in the form of a mobile telephone will be used as a non-limiting example of a portable electronic apparatus in the following.

Conventionally, mobile terminals have been equipped with a single display. More recently, mobile terminals have been introduced which have both a main, front-mounted display and an auxiliary display, typically mounted either on a rear side of the terminal, or in a separate housing member hinged to the main terminal housing (such models are often referred to as foldable terminals or clamshell terminals). Since multimedia applications, based for instance on Internet services, are expected to continue to grow rapidly in popularity, it is likely that user demands for larger displays and/or more display areas will become stronger and stronger.

New, flexible display technologies may for instance make it feasible to provide a single physical display that extends across more than one housing side of the mobile terminal, thereby in effect offering a plurality of display areas, one at each housing side of the mobile terminal. Alternatively or additionally, multiple separate physical displays may be provided on different housing sides, thereby again offering a plurality of display areas at different locations on the housing of the mobile terminal. If the traditional mechanical keypad in the man-machine interface (MMI) is replaced by touch-sensitive display technologies, such multiple display areas may be even more feasible.

However, a problem to consider when a mobile terminal is provided with several display areas at different locations on the mobile terminal is that it will be difficult to know which particular display area(s) that the user is currently monitoring. This has to do with the portable nature of the mobile terminal. Since it is hand-held, it can be held in many different spatial orientations and can be viewed by the user from many different angles, not necessarily only the traditional straight-from-the-front approach. If the display areas are touch-sensitive and therefore also serve as input devices, it is even harder to predict which particular display area(s) may be used by the user at a given moment.

In turn, this may require the mobile terminal to keep all display areas activated, i.e. driven with full power to be capable to present information as required, and possibly also to accept hand-made input (when the display area is touch-sensitive). However, this poses a new problem; keeping all display areas activated will consume more electric power, and electric power is a limited resource in a portable, battery-driven electronic apparatus.

US2007/0188 450 A1 and US 2007/0232 336 A1 both disclose portable electronic apparatus according to the preamble of claim 1.

Therefore, there is a need for improvements in the way the user interface is controlled for a portable electronic apparatus that comprises more than one display area.

### Summary

It is accordingly an object of the invention to eliminate or alleviate at least some of the above problems referred to above.

As a conceptual idea behind the invention, the present inventor has realized that novel and beneficial use may be made of an orientation sensor or tilt sensor, for instance in the form of an accelerometer or similar external force-measuring device known as such, as a part of a selective control scheme for the different display areas which allows a kind of handover of the user interface from one currently active display area to another one which is to become active. As an optional extension of this conceptual idea, the present inventor has further realized that image capturing and processing devices, for instance in the form of camera(s) in combination with an image processor having face detection functionality also known as such, may be used to enhance the accuracy of the selective control of the different display areas.

This conceptual idea has been reduced to practice at least according to the aspects and embodiments of the invention referred to below.

One aspect of the present invention therefore is a portable electronic apparatus having first and second display areas, the apparatus comprising
an orientation sensor configured to provide an orientation sensor output signal indicative of a spatial orientation of said apparatus; and
a display controller coupled to said first and second display areas and to said orientation sensor, said display controller being responsive to said orientation sensor output signal to selectively control said first display area and said second display area.

Thanks to this arrangement, the display controller can selectively drive one of the first and second display areas differently from the other one, and, consequently, make optimal use of the first and second display areas depending on the current spatial orientation of the portable electronic apparatus. Within the context of the present invention, "spatial orientation" refers to an orientation of the portable electronic apparatus in one or more dimensions in a two-dimensional or three-dimensional space. Moreover, "the orientation sensor output signal [being] indicative of a spatial orientation of the portable electronic apparatus" means that the orientation sensor output signal will contain information from which a current orientation, or change in orientation (i.e. movement), of the portable electronic apparatus can be derived. For embodiments where "spatial orientation" refers to at least two dimensions, the orientation sensor may either be composed of a single sensor unit capable of sensing the orientation (or movement) of the portable electronic apparatus in said at least two dimensions, or of a plurality of sensor units, each capable of sensing the orientation (or movement) of the portable electronic apparatus in a respective one of said at least two dimensions.

The display controller is adapted to selectively control said first display area and said second display area by:
maintaining one of said first and second display areas in a first display state, and another of said first and second display areas in a second state, said second display state being a state with less display activity than said first display state;
determining, from said orientation sensor output signal, a movement of said portable electronic apparatus; and, in response,
causing said one of said first and second display areas to switch from said first display state to said second display state, and said other of said first and second display areas to switch from said second display state to said first display state.

The first display state may be a state where the particular display area is activated, i.e. with full capacity for visual presentation of information, whereas the second display state may be a state where the particular display area is deactivated (for instance powered off, or put in an idle or power-save mode), i.e. with no capacity for visual presentation of information, or at least with less than full capacity for visual presentation of information (for instance with reduced display brightness or color spectrum).

More specifically, the display controller is further adapted to perform said causing to switch between first and second display states by
first causing said other of said first and second display areas to switch from said second display state to said first display state;
then maintaining, during a transition time period, both of said first and second display areas in said first display state; and
finally, after said transition time period has lapsed, causing said one of said first and second display areas to switch from said first display state to said second display state,
wherein said transition time period is a function of a speed of said determined movement of said portable electronic apparatus.

This allows adaptation of the handover of the MMI to the behavior of the user, so that a rapid tilting of the apparatus will trigger a rapid switch of the display areas, whereas the MMI handover will be performed during a longer transition time period for a slower tilting of the apparatus. Keeping both display areas active during a longer transition time period when the apparatus is tilted slowly will be beneficial to the user, since he may continue to monitor the old display area at least for a part of the transition time period and decide for himself when to move his eyes to the new display area.

The orientation sensor may comprise an accelerometer capable of sensing at least one of a static acceleration and a dynamic acceleration of said portable electronic apparatus. To this end, the orientation sensor may measure the static acceleration force on the portable electronic apparatus caused by gravity, and the orientation sensor output signal may thus be used to derive a tilt angle of the portable electronic apparatus with respect to a ground plane. Additionally or alternatively, the orientation sensor may measure the dynamic acceleration force on the portable electronic apparatus caused by movement of the apparatus, and the orientation sensor output signal may therefore be used to determine that the portable electronic apparatus is being moved.

In one or more embodiments where the portable electronic apparatus further has a memory, said display controller is configured to read from said memory a previous orientation of said apparatus, determine from said orientation sensor output signal a current orientation of said apparatus, and selectively control said first display area and said second display area based on a difference between said previous orientation and said current orientation of said apparatus.

The display controller may be further adapted to compare the determined movement of said portable electronic apparatus to a threshold and to perform said causing to switch between first and second display states for said first and second display areas only if the determined movement exceeds said threshold.

Enhanced accuracy of the selective control of the first and second display areas is provided in one or more embodiments, where the portable electronic apparatus further comprises an image processor associated with said display controller, said image processor being configured to investigate a captured image of a surrounding of said portable electronic apparatus for any presence in said captured image of an object of a certain kind, and to indicate such presence in an image processor output signal,
wherein said display controller is responsive also to said image processor output signal for the selective control of said first display area and said second display area.

Aforesaid certain kind of object may advantageously be the face of one or more human individuals, wherein said image processor will be configured to execute a face detection algorithm in order to detect the presence of a user of said portable electronic apparatus.

For such embodiments, the captured image will contain a surrounding of said other of said first and second display areas, and said display controller will be configured, after the determining of a movement of said portable electronic apparatus, to:
verify that said image processor has detected a face in said captured image and thus indicates presence of said user at said other of said first and second display areas, and
perform said causing of said other of said first and second display areas to switch from said second display state to said first display state, only upon an affirmative result from said verification by said image processor.

The provision of face detection functionality will therefore enhance the accuracy of the selective control of the first and second display areas, by verifying that the user is present at the particular display area which, according to the determined apparatus movement, the display controller intends to switch to.

In one or more embodiments, the display controller is adapted, after having performed said causing to switch between first and second display states, to:
receive a sequence of captured images of said surrounding of said portable electronic apparatus;
determine an angular change in the appearance of the face of said user, as detected in the sequence of captured images, and
control said other of said first and second display areas to switch from a first angular display mode to a second angular display mode.

The first angular display mode may for instance be a portrait mode (or a zero-degree rotated display mode), and the second angular display mode may be a landscape mode (or a mode where the display contents are rotated by, for instance, 90 degrees compared to the first angular display mode). This arrangement will allow a user to put down his portable electronic apparatus on a table or other steady surface, and move freely around the table (etc), with the angular display mode of the apparatus being automatically adjusted so that the display contents will continue to appear at a suitable orientation for the user.

In one or more embodiments, the first and second display areas are two physically different displays on said apparatus. Alternatively, the first and second display areas may be different parts of one common display of said apparatus. The portable electronic apparatus may have additional display area(s), such as a third display area, a fourth display area, etc. Such additional display area(s) may be controlled by said display controller in the same way as the first and second display areas.

The portable electronic apparatus may advantageously, but not necessarily, be embodied as a mobile terminal, such as a mobile telephone for a mobile telecommunications system, including but not limited to GSM, UMTS, D-AMPS, CDMA2000, FOMA or TD-SCDMA.

A second aspect of the invention is a method of controlling a user interface of a portable electronic apparatus having first and second display areas, the method involving
determining a spatial orientation, or change in spatial orientation, of said apparatus; and
selectively controlling said first display area and said second display area in response to the determined spatial orientation, or change in spatial orientation, of said apparatus.

Said first display area and said second display area are selectively controlled by:
maintaining one of said first and second display areas in a first display state, and another of said first and second display areas in a second state, said second display state being a state with less display activity than said first display state;
determining a movement of said apparatus from the determined spatial orientation, or change in spatial orientation, of said apparatus; and, in response,
causing said one of said first and second display areas to switch from said first display state to said second display state, and said other of said first and second display areas to switch from said second display state to said first display state.

More specifically, said causing to switch between first and second display states involves:
causing said other of said first and second display areas to switch from said second display state to said first display state;
calculating a transition time period as a function of a speed of said determined movement of said portable electronic apparatus;
maintaining, during said transition time period, both of said first and second display areas in said first display state; and
after said transition time period has lapsed, causing said one of said first and second display areas to switch from said first display state to said second display state.

Aforesaid determining may involve:
determining a current orientation of said apparatus; and
reading a stored previous orientation of said apparatus,
wherein said first display area and said second display area are selectively controlled based on a difference between said previous orientation and said current orientation of said apparatus.

One or more embodiments may further involve comparing the determined movement of said apparatus to a threshold and performing said causing to switch between first and second display states for said first and second display areas only if the determined movement exceeds said threshold.

One or more embodiments involve functionality for enhancing the accuracy of the selective control of the first and second display areas by:
receiving a captured image of a surrounding of said portable electronic apparatus; and
investigating said captured image for any presence therein of an object of a certain kind,
wherein said first display area and said second display area are selectively controlled also based on a result of said investigating of said captured image.

Said certain kind of object is advantageously the face of one or more human individuals, and said investigating of said captured image may thus involve executing a face detection algorithm in order to detect the presence of a user of said portable electronic apparatus.

In one or more embodiments, the captured image contains a surrounding of said other of said first and second display areas, wherein the method involves:
verifying, after the determining of a movement of said portable electronic apparatus, that a face has been detected in said captured image and thus indicates presence of said user at said other of said first and second display areas, and
performing said causing of said other of said first and second display areas to switch from said second display state to said first display state, only upon an affirmative result from said verifying.

One or more embodiments further involve:
receiving, after said causing to switch between first and second display states, a sequence of captured images of said surrounding of said portable electronic apparatus;
executing said face detection algorithm to detect faces in said sequence of captured images;
determining an angular change in the appearance of the face of said user, as detected in the sequence of captured images, and
controlling said other of said first and second display areas to switch from a first angular display mode to a second angular display mode.

It should be emphasized that the term "comprises/comprising" when used in this specification is taken to specify the presence of stated features, integers, steps, or components, but does not preclude the presence or addition of one or more other features, integers, steps, components, or groups thereof.

### Brief Description of the Drawings

Objects, features and advantages of embodiments of the invention will appear from the following detailed description, reference being made to the accompanying drawings, in which:
Fig 1 is a schematic illustration of a non-limiting example of an environment in which embodiments of the present invention may be exercised;
Figs 2a-c are a schematic front view, rear view and partially sectional side view, respectively, of a portable electronic apparatus according to a first embodiment of the present invention, embodied as a mobile terminal having a first display area in the form of a front-mounted display, and a second display area in the form of a rear-mounted display;
Fig 3 is a schematic block diagram representing the major components, within the context of the present invention, of a portable electronic apparatus according to one embodiment;
Fig 4 is a schematic flowchart of a method according to one embodiment of the present invention;
Figs 5a-c illustrate different spatial orientations of a portable electronic apparatus according to one embodiment, and how different display areas thereof are selectively controlled in accordance with the inventive concept;
Fig 6a-b are schematic perspective views of a portable electronic apparatus according to a second embodiment of the present invention, having a display which extends to all six sides of the apparatus housing, each side thus accommodating a respective display area forming part of said display; and
Figs 7 and 8 schematically illustrate images captured by a front-mounted and a rear-mounted camera, respectively, of the portable electronic apparatus according to one embodiment, wherein faces of human individuals are included in the illustrated images.

### Detailed Description

Embodiments of the invention will be now described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

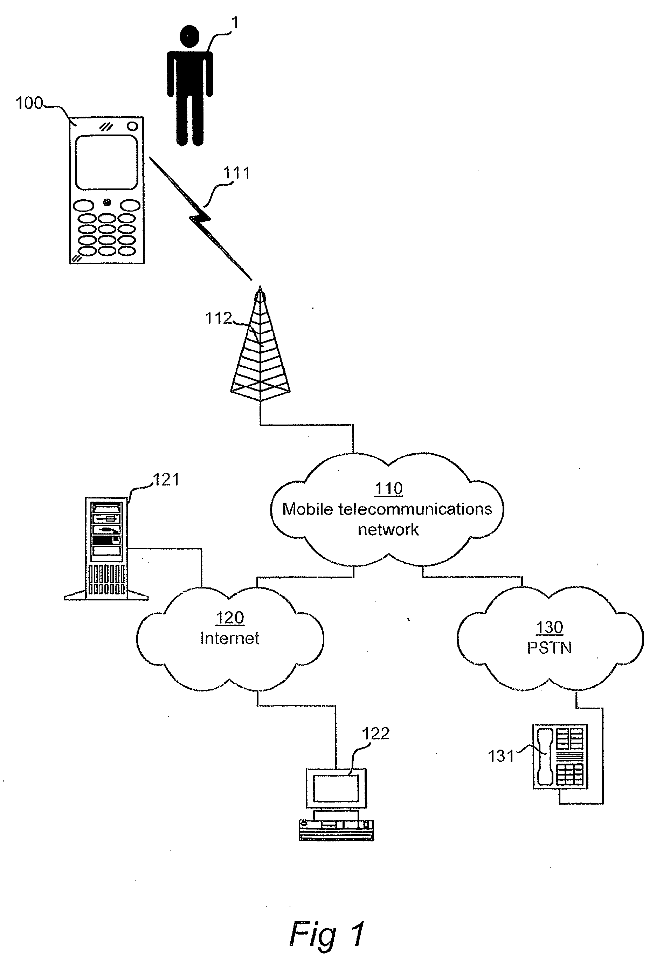

Before turning to a detailed description of the disclosed embodiments, an exemplifying environment in which they may be exercised will now be briefly described with reference to Fig 1.

In Fig 1, a portable electronic apparatus in the form of a mobile terminal 100 is part of a cellular telecommunications system. A user 1 of the mobile terminal 100 may use different telecommunications services, such as voice calls, Internet browsing, video calls, data calls, facsimile transmissions, still image transmissions, video transmissions, electronic messaging, and e-commerce. These described telecommunication services are however not central within the context of the present invention; there are no limitations to any particular set of services in this respect.

The mobile terminal 100 connects to a mobile telecommunications network 110 over a radio link 111 and a base station 112. The mobile terminal 100 and the mobile telecommunications network 110 may comply with any commercially available mobile telecommunications standard, including but not limited to GSM, UMTS, D-AMPS, CDMA2000, FOMA and TD-SCDMA. As already mentioned, embodiments of the mobile terminal 100 will be described in more detail later with reference to the remaining drawings.

A conventional public switched telephone network (PSTN) 130 is connected to the mobile telecommunications network 110. Various telephone terminals, including a stationary telephone 131, may connect to the PSTN 130.

The mobile telecommunications network 110 is also operatively associated with a wide area data network 120, such as the Internet. Server computers 121 and client computers 122 may be connected to the wide area data network 120 and therefore allow communication with the mobile terminal 100.

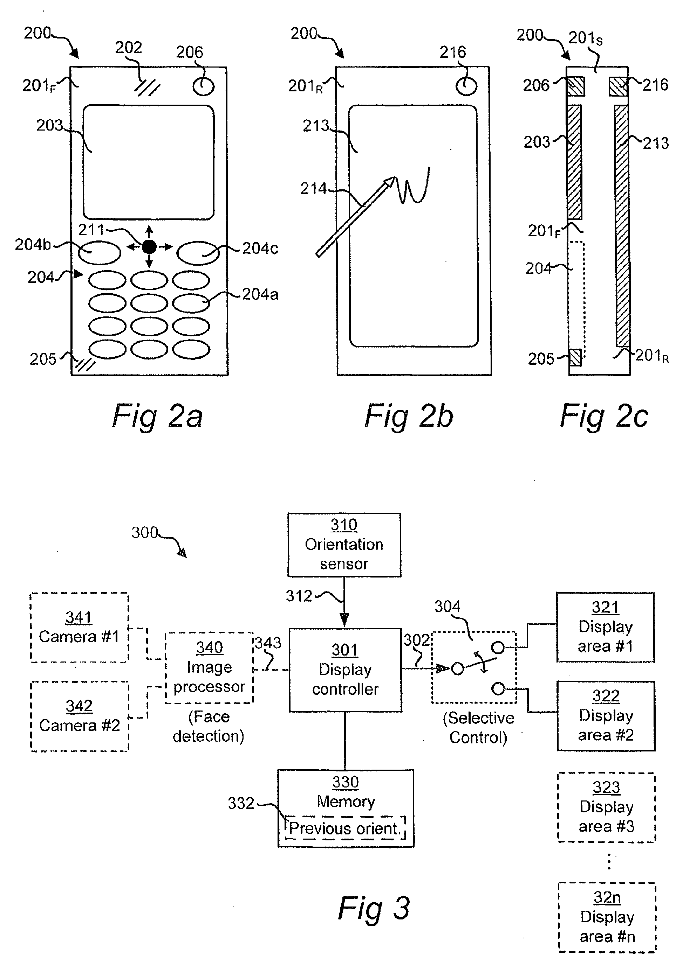

An embodiment 200 of the mobile terminal 100 is illustrated in more detail in Figs 2a-c. The mobile terminal 200 has a housing that includes a front side 201_{F}, a rear side 201_{R} and a lateral side 201_{S}. The front side 201_{F} has a first user interface or MMI that involves a speaker or earphone 202, a microphone 205, a first display 203, and a set of keys 204 which may include an ITU-T type keypad 204a (i.e., an alpha-numerical keypad representing keys 0-9, * and #) and certain special keys such as soft keys 204b, 204c. A joystick 211 or similar navigational input device (e.g. scroll keys, touchpad, or navigation key) is also provided. Furthermore, a first camera 206 is mounted on the front side 201_{F}. Other well-known external components may be provided, such as power switch, battery, charger interface, accessory interface, volume controls and external antenna, but are not indicated in Figs 2a-c for the sake of clarity.

The rear side 201_{R} has a second user interface or MMI with a second display 213, which, in contrast to the first display 203, is touch-sensitive and allows user operation by way of a stylus 214. Also, even if not indicated in Fig 2b, the second user interface may involve a second speaker and/or a second microphone. A second camera 216 is mounted on the rear side 201_{R}.

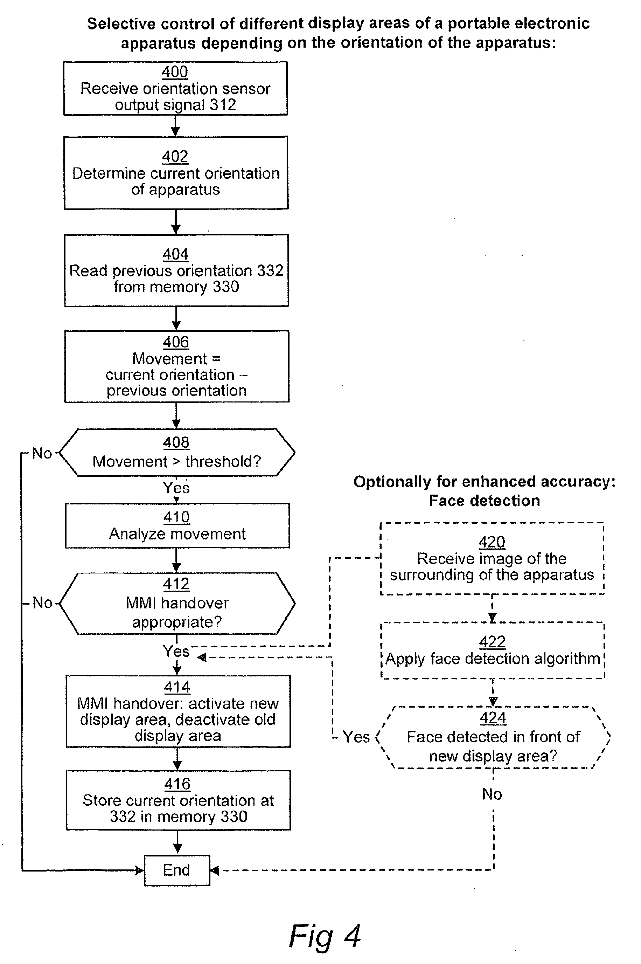

The internal component structure of a portable electronic apparatus according to one embodiment will now be described with reference to Fig 3. The embodiment of Fig 3 may, but does not have to, be the mobile terminal 200 of Figs 2a-c. The portable electronic apparatus 300 of Fig 3 has a display controller 301, which is configured for selective control 304 of a first display area 321 (for instance the first display 203 of the mobile terminal 200) and a second display area 322 (for instance the second display 213 3 of the mobile terminal 200) via a display controller output signal 302. Even when shown as an electrical switch symbol in Fig 3, the selective control 304 performed by the display controller 30I is rather to be regarded in functional terms. The functionality of this selective control 304 will appear clearly from the description of Fig 4 below.

The number of display areas is not necessarily limited to two. On the contrary, additional display areas 323...32n may be provided in some embodiments, as is schematically indicated as dashed boxes in Fig 3.

To facilitate the display controller's 301 selective control of the first and second display areas 321, 322, the apparatus 300 contains an orientation sensor 310 which is coupled to the display controller 301 and serves to provide the latter with an orientation sensor output signal 312 indicative of a current spatial orientation, or change in such spatial orientation (i.e. movement), of the apparatus 300 with respect to its surroundings. In the disclosed embodiment of Fig 3, the orientation sensor 310 is an external force-measuring device known as an accelerometer.

The display controller 301 includes, is coupled to or otherwise associated with a memory 330. The memory 330 stores data 332 representing a previous orientation of the portable electronic apparatus 300, as detected by the orientation sensor 310 at an earlier point in time.

The disclosed embodiment of Fig 3 provides enhanced accuracy for the selective control of the first and second display areas 321 and 322, by the provision of face detection functionality which is indicated as an image processor 340 in Fig 3. To this end, the Fig 3 embodiment of the apparatus 300 has first and second cameras 341, 342 which are positioned to capture images of the surroundings around the first and second display areas 321 and 322, respectively. (However, the face detection functionality need not be present in all possible embodiments of the invention; therefore the elements 340-342 are indicated as dashed boxes in Fig 3).

When the apparatus 300 is realized as the mobile terminal 200 of Figs 2a-c, the first camera 341 will thus be the first camera 206 on the front side 201_{F} of the terminal's housing, and it will be positioned to capture images of a surrounding of the terminal's first display 203. The purpose of this image capturing will be to register when a user 1 is present in front of the first display 203, as detected by the presence of at least a part of the user 1 - typically his face - in the images captured by the first camera 206. Correspondingly, the second camera 342 will be the second camera 216 on the rear side 201_{R} of the housing of the mobile terminal 200, the second camera 216 being positioned to register when the user 1 is instead present at the second display 213.

The image processor 340 is thus coupled to receive images captured by the first and second cameras 341 (206) and 342 (216) and to perform a face detection algorithm so as to detect the presence of a user's face in any of the captured images. The results of the face detection algorithm will be communicated in an image processor output signal 343 to the display controller 301. Further details on how these results may be used by the display controller 301 will be given later with reference to Fig 4.

The display controller 301, which is responsible for the selective control of the first and second display areas 321, 322, may be implemented by any commercially available and suitably programmed CPU ("Central Processing Unit") or DSP ("Digital Signal Processor"), or alternatively by any other electronic logic device such as an FPGA ("Field-Programmable Gate Array"), an ASIC ("Application-Specific Integrated Circuit") or basically any combination of digital and/or analog components which, in the mind of a skilled person, would be a natural choice in order to implement the disclosed functionality. In some embodiments it may be combined with, i.e. realized by, a main controller that is responsible for the overall operation of the apparatus.

The memory 330 may be realized by any available kind of memory device, such as a RAM memory, a ROM memory, an EEPROM memory, a flash memory, a hard disk, or any combination thereof. In addition to storing the previous orientation 332, the memory 302 may be used for various purposes by the display controller 301 as well as by other controllers in the portable electronic apparatus (such as the aforementioned main controller), including but not limited to storing data and program instructions for various software in the portable electronic apparatus.

Particularly for embodiments where the portable electronic apparatus 300 is a mobile terminal, like the mobile terminal 200 referred to above, the software stored in memory 330 may include a real-time operating system, drivers for the user interface (MMI), an application handler as well as various applications. The applications may include applications for voice calls, video calls and messaging (e.g. SMS, MMS, fax or email), a phone book or contacts application, a WAP/WWW browser, a media player, a calendar application, a control panel application, a camera application, video games, a notepad application, etc.

Furthermore, still with reference to embodiments where the portable electronic apparatus is a mobile terminal, the apparatus typically has a radio interface. The radio interface comprises an internal or external antenna as well as appropriate electronic radio circuitry for establishing and maintaining a wireless link to a base station (for instance the radio link 111 and base station 112 in Fig 1). As is well known to a man skilled in the art, the electronic radio circuitry comprises analog and digital components which constitute a radio receiver and transmitter. Such components may include band pass filters, amplifiers, mixers, local oscillators, low pass filters, AD/DA converters, etc. The radio interface typically also includes associated communication service software in the form of modules, protocol stacks and drivers.

Typically but optionally, the apparatus also includes one or more interfaces for short-range supplemental data communication, such as a Bluetooth interface, an IrDA (infrared) interface or a wireless LAN (WLAN) interface.

The orientation sensor 310 may, as already indicated, be implemented as a tilt sensor or accelerometer. As such, accelerometers are commonly available in several types, operating in one, two or three dimensions (one-axis, two-axis and three-axis accelerometers, respectively). For instance, three-axis accelerometers suitable for portable or hand-held applications are commercially available from manufacturers like Analog Devices, Honeywell, STMicroelectronics and Freescale Semiconductor; therefore, the selection of an appropriate accelerometer when exercising the invention is believed to be well within reach for a person of ordinary skill, and no further details are believed to be required herein.

The image processor 340 may be a separate device, or the functionality thereof may be integrated with the display controller 301 or another processing device in the apparatus 300, such as a main controller thereof. In embodiments where it is a separate device, the image processor 340 may be implemented by any commercially available CPU, DSP, FPGA, ASIC or basically any combination of digital and/or analog components which, in the mind of a skilled person, would be a natural choice in order to implement the disclosed functionality. In embodiments where it is integrated with the display controller 301, the image processor 340 may be implemented wholly or partly as software executed by the display controller 301, and its output signal 343 may be realized as a function call, program flag, semaphore, assignment of a certain global data variable, or any other suitable way of conveying the results of the face detection algorithm to the display controller 301 for use in the latter's selective control 304 of the first and second display areas 321, 322.

The face detection functionality performed by the image processor 340 may be implemented by any suitable face detection algorithm. A variety of face detection algorithms are known which operate on a digital image to detect one or more faces or facial features contained therein, while ignoring other objects in the image, such as buildings, trees, cars and bodies. One common approach involves removing a mono-color background and deriving the face boundaries. Other approaches are to search for a typical skin color in order to find face segments, or to determine an image area that contains movements between subsequent images (using the fact that a human face is almost always moving in reality). Hybrids of these approaches are also known. More sophisticated face detection algorithms are also capable of detecting faces that are rotated horizontally, vertically, or both, in the image.

Two commonly used face detection algorithms are the Viola-Jones algorithm ("Rapid Object Detection Using a Boosted Cascade of Simple Features", Viola, P.; Jones, M., Mitsubishi Electric Research Laboratories, TR2004-043, May 2004) and the Schneiderman-Kanade algorithm ("A Statistical Method for 3D Object Detection Applied to Faces and Cars", Henry Schneiderman and Takeo Kanade, Robotics Institute, Carnegie Mellon University, Pittsburgh, PA 15213, USA).

It is therefore well within reach for a man skilled in the art to choose any of the various existing face detection algorithms and implement it for a portable electronic apparatus according to the invention; therefore no further particular are believed to be necessary herein.

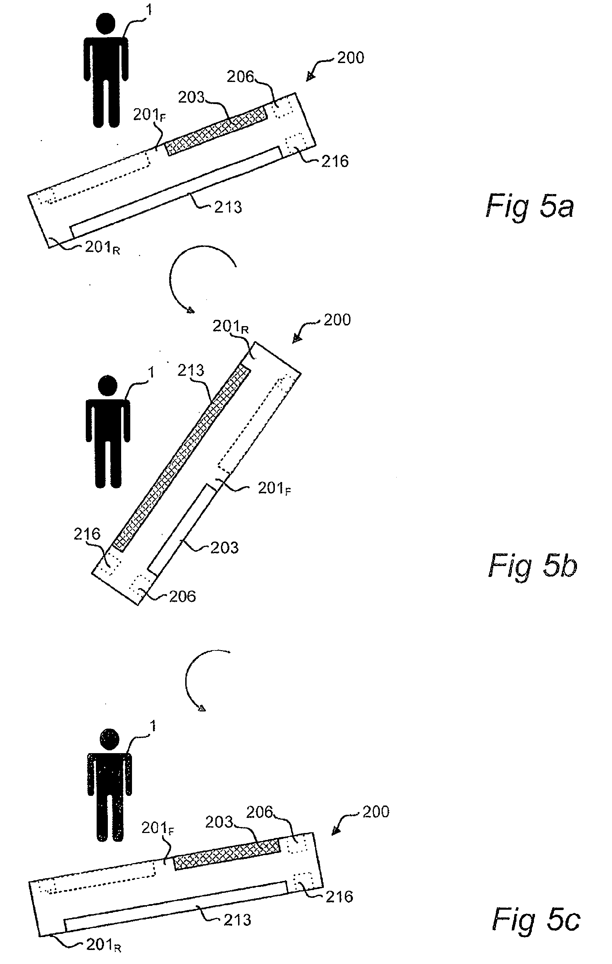

The functionality according to the invention for providing selective control of different display areas of a portable electronic apparatus depending on the orientation of the apparatus will now be exemplified in more detail with reference to Figs 4 and 5a-c. Fig 4 thus discloses a method of controlling a user interface, which includes the first and second display areas 321 and 322, in response to information about the current spatial orientation, or change in orientation, provided by the orientation sensor 310.

The method of Fig 4 starts with steps 400 and 402, in which the display controller 301 receives the orientation sensor output signal 312 from the orientation sensor 310 and determines a current orientation of the apparatus 300. Thus, at this stage the orientation sensor output signal 312 reflects a current orientation of the apparatus 300. Assuming that the apparatus 300 is the afore-described mobile terminal 200, this current orientation may be like the one illustrated in Fig 5a: The mobile terminal 200 is currently held in a slightly inclined orientation, the first display area 203 facing upwardly at an angle to the user 1. In other words, in the situation of Fig 5a, the user interface (MMI) that the user is currently using is the one that includes the first display area 203 and the keypad 204. The currently active display 203 is marked with a shadowed filling in Fig 5a.

In a following step 404, the display controller 301 reads the previous orientation of the apparatus 300, as stored at 332 in memory 330. Then, in step 406, the display controller 301 calculates a movement of the apparatus 300 as the difference between the current orientation and the previous orientation 332. As a filter against accidental movements of the apparatus 300, for instance caused by a trembling hand, the calculated movement is compared in step 408 to a threshold, and if the threshold is not met, the execution ends.

Otherwise, if the calculated movement is found in step 408 to exceed the threshold, the movement is analyzed in step 410. This analysis will be made in one, two or three dimensions depending on the dimensional scope of the current orientation as available from the orientation sensor output signal 312 (i.e., when a three-axis accelerometer implements the orientation sensor 310, the analysis in step 410 may occur in three dimensions, etc). A conclusion is drawn in the following step 412 as to whether a handover of the user interface (MMI) from the currently active display area 321 or 322 to the other one (322 or 321) is appropriate given the determined and analyzed movement of the apparatus 300.

For instance, referring again to the examples in Figs 5a-c, if the previous orientation of the mobile terminal 200 was as shown in Fig 5a (where, consequently, the first, front-mounted display 203 was activated), and the current orientation is as shown in Fig 5b, it may be concluded in step 412 that a handover to the second, read-mounted display 213 is appropriate (based on the assumption that the user 1 has remained stationary). The concluded handover is executed in step 414 by activating the new display area (second display 213 in the example of Fig 5b) and deactivating the old, hitherto activated display area (first display 203 in the example of Fig 5a).

In this context, an activated display area may be where the particular display area is driven at full capacity for visual presentation of information, whereas a deactivated display area may mean no capacity for visual presentation of information (by, for instance, powering off the deactivated display area, or putting it in an idle or power-save mode), or at least less than full capacity for visual presentation of information (for instance by driving the deactivated display area with a reduced display brightness or color spectrum).

In embodiments, there is a transition time period in the MMI handover step 414, during which both the old and the new display areas are active, until subsequently the old display area is deactivated. The display controller 301 may be configured to calculate the duration of the transition time period as a function of the speed of the determined movement of the apparatus. This will adapt the handover of the YIMI to the behavior of the user, so that a rapid tilting of the apparatus will trigger a rapid switch of the display areas, whereas the MMI handover will be performed during a longer transition time period for a slower tilting of the apparatus. Keeping both display areas active during a longer transition time period when the apparatus is tilted slowly will be beneficial to the user, since he may continue to monitor the old display area at least for a part of the transition time period and decide for himself when to move his eyes to the new display area.

After the MMI handover step 414, the current orientation replaces the previous orientation by storing in step 416 the current orientation at the memory location 332 in memory 330. Then, the execution ends. The next time the display controller 301 executes the method of Fig 4, the memory location 332 will thus represent the previous orientation for use in steps 404 and 406. This time, the example may continue as shown in Fig 5c, where the mobile terminal 200 is moved into an orientation where, again, the first display 203 is deemed to be the one that best suits the user 1, and a switch back to this display is therefore performed in step 414.

It was mentioned above that the decision made in step 412 - as to whether or not an MMI handover between display areas 321 and 322 is appropriate - would be based on the assumption that the user 1 remains stationary. Since this may not always be the case in reality, the embodiment of Figs 3 and 4 provides enhanced accuracy in the selective control of the display areas 321 and 322 by the provision of the face detection functionality provided by the image processor 340 in cooperation with the cameras 341 and 342. This functionality is performed as steps 420-424 in Fig 4, in the form of a branch performed after the MMI handover determination step 412 but prior to the actual execution of the MMI handover in step 414:

In step 420, image(s) of the surrounding of the apparatus 300 is/are received by the image processor 340 from the camera 341 and/or 342. In one embodiment, the image processor 340 only performs the face detection algorithm of a following step 422 for an image captured in front of the new display area 321 or 322 that, according to the MMI handover determination step 412, is intended to be activated in the MMI handover step 414. In this case, the image processor 340 only needs to receive, in step 420, an image from the particular camera 341 or 342 that is positioned to capture images of the surrounding of this new display area 321 or 322. In other words, in the example of Figs 5a-b where the terminal 200 is moved from the orientation shown in Fig 5a to the orientation of Fig 5b, the new display area will be the rear-mounted second display 213, and accordingly the image processor 340 will receive in step 420 an image captured by the rear-mounted second camera 216 and perform in step 422 the face detection algorithm for this image.

The results of the face detection algorithm will be provided to the display controller 301 in the image processor output signal 343. In step 424, the display controller 301 thus determines whether a face has been detected in the image analyzed in step 422. If the answer is affirmative, the display controller 301 concludes that the head of the user 1 is likely apparent in front of the new display area and that the intended MMI handover, as determined in step 412, can be performed in step 414 as planned. If, on the other hand, no face was detected by the face detection algorithm in step 424, the display controller 301 concludes that the intended MMI handover shall not be performed, since it has not been verified that the user 1 is actually monitoring the new display area, and the execution ends without performing the intended activation of the new display area in the MMI handover step 414.

In other embodiments, images from both cameras 341 and 342 are used in the face detection functionality of steps 420-424 in Fig 4. This allows for a further improved accuracy in the selective control of the display areas 321 and 322, since a situation can be handled where more than one individual appears in the surrounding of the apparatus 300. For instance, in the examples of Figs 5a-c, the display controller 301 may use the image processor 340 and both cameras 341/206 and 342/216 to check for presence of individuals both at the first display area 321/203 and at the second display area 322/213.

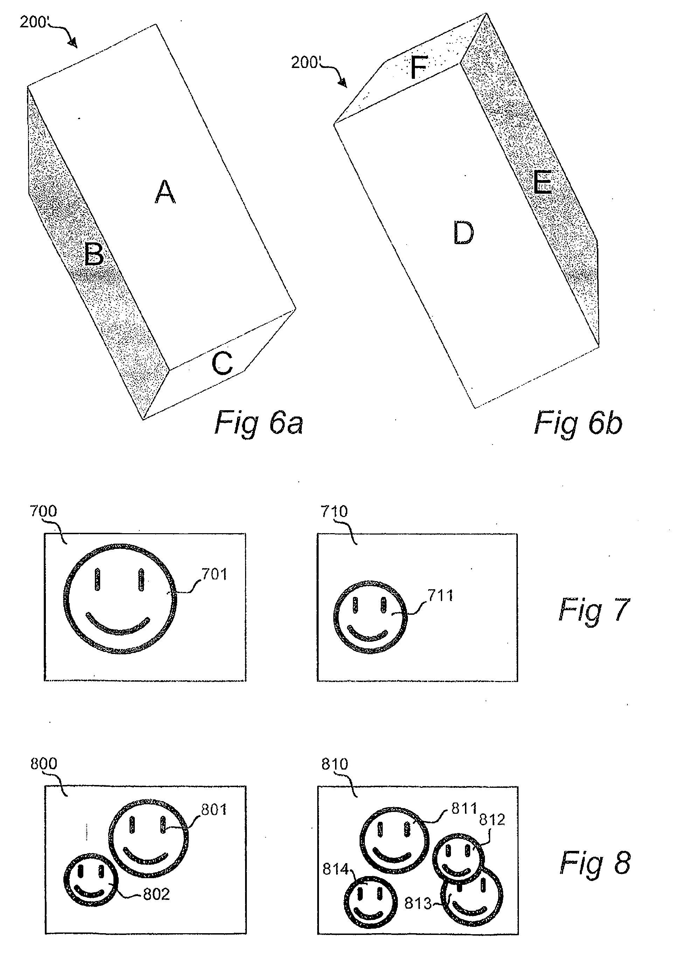

This means that situations where faces appear both in the image from the first camera 341/206 and in the image from the second camera 342/216 must be handled. One such situation is illustrated in Fig 7, where a face 701 appears in an image 700 captured by the first camera 341/206, and another face 711 appears in an image 710 captured by the second camera 342/216. In this case, the display controller 301 may be configured to use information of the size of the respective face 701 and 711, as reported by the image processor 340, and to give preference to the image in which the largest face appears, indicative of the corresponding individual being positioned closer to the apparatus 300 and therefore likely being the user 1. "Giving preference" will in this context mean that if the largest face 701 appears in the new display area, step 424 will be in the affirmative.

Another situation is illustrated in Fig 8. Here, two faces 801 and 802 appear in an image 800 captured by the first camera 341/206, whereas four faces 811-814 appear in an image 810 captured by the second camera 342/216. In this case, the display controller 301 may be configured to count the number of faces appearing in the respective image, and to give preference to the image in which the largest number of faces appear, based on the assumption that the user 1 is more likely to be positioned where the crowd is.

Combinations of and alternatives to these situations may of course also be used in embodiments of the invention. For instance, preference may be given to an image from one camera, where a single face appears which is considerably larger than any of a plurality of faces appearing in an image from the other camera. Consideration may also be given to the brightness, sharpness or color with which a face appears in an image compared to the appearance of other face(s) in the same and/or other image.

The display controller 301 may be configured to repeat the method of Fig 4 at a certain periodicity, for instance each n:th second or millisecond. Alternatively, the performance of the method may be triggered by the orientation sensor 310 detecting a movement of the apparatus 300 (200). Embodiments are possible where the orientation sensor 310 detects movement (i.e. change in orientation) of the apparatus 300 and reports such movement, rather than the current orientation, as the orientation sensor output signal 312. In effect, for such embodiments, steps 400 to 406, or even 408, can be performed by the orientation sensor 310 rather than the display controller 301.

Also, it is to be noticed that initially (i.e. prior to the first iteration of the method of Fig 4, for instance right after power-on), the previous orientation 332 may be assigned an assumed default orientation, and the active display area may be set, by default, to for instance the first display area 321, or the display area belonging to the user interface used by the user I for powering on the apparatus 300.

In one embodiment, in response to a detected user input, the active display area is automatically set to the display area belonging to the input device used (e.g. display 203 in Fig 2a-c and 5, when the user 1 has made an input on the keypad 204). Thus, in this embodiment, detection of a user input will override the method of Fig 4.

One embodiment offers a further convenience to the user 1 even after the user has stopped moving the apparatus 300 and put it in a spatially steady state (for instance by putting the apparatus on the surface of a table). Thus, after completion of step 416 in the method of Fig 4, the display controller 301 will repeatedly receive a sequence of images from at least the camera 341 or 342 that is located to capture images of the surrounding of the currently activated display area (i.e. the new display area activated in step 414). In the sequence of captured images the display controller 301 will determine an angular change in the appearance of the face of the user 1, and control the currently activated display area to switch from a first angular display mode (for instance a portrait mode or a zero-degree rotated display mode) to a second angular display mode (for instance a landscape mode or a mode where the display contents are rotated by, e.g., 90 degrees compared to the first angular display mode). The user 1 may therefore move conveniently around the steadily oriented apparatus 300, with the angular display mode of the apparatus being automatically adjusted so that the display contents will continue to appear at a suitable orientation for the user.

In the embodiments disclosed above, the portable electronic apparatus of the invention has been described as a mobile terminal, in particular a mobile telephone. Generally, however, the portable electronic apparatus of the invention may be embodied as or included in various portable electronic equipment, including but not limited to a personal digital assistant (PDA), a portable media player (e.g. a DVD player), a palmtop computer, a digital camera, a game console, or a navigator.

Also, in the embodiment disclosed above in Figs 2a-c, the first and second display areas 321 and 322 are two physically different displays 203 and 213 on said apparatus. In other embodiments, however, the first and second display areas 321 and 322 may be different parts of one common display of the portable electronic apparatus. As previously mentioned, the portable electronic apparatus may have additional display area(s), such as a third display area 323, a fourth display area, etc. Such additional display area(s) 323-32n may be controlled by the display controller 301 in the same way as the first and second display areas 321 and 322. An example of such an alternative embodiment is shown in Figs 6a and 6b. Here, the portable electronic apparatus 200' has a housing shaped much like a rectangular box having a front side A, a rear side D, a top side F, a bottom side C, and lateral sides B and E. A respective display area may be located on two, three, four, five or even all of the sides A, B, C, D, E and F of this apparatus housing.

The invention has, consequently, been described above with reference to some embodiments thereof. However, as is readily understood by a skilled person, other embodiments are also possible within the scope of the present invention, as defined by the appended claims.

## Claims

1. A portable electronic apparatus (200; 300) having first and second display areas (203, 213; 321, 322), comprising
an orientation sensor (310) configured to provide an orientation sensor output signal (312) indicative of a spatial orientation of said apparatus (200; 300); and
a display controller (301) coupled to said first and second display areas (321, 322) and to said orientation sensor, said display controller being responsive to said orientation sensor output signal to selectively control said first display area and said second display area by:
maintaining one of said first and second display areas in a first display state, and another of said first and second display areas in a second state, said second display state being a state with less display activity than said first display state;
determining, from said orientation sensor output signal (312), a movement of said portable electronic apparatus (200; 300); and, in response,
causing said one of said first and second display areas to switch from said first display state to said second display state, and said other of said first and second display areas to switch from said second display state to said first display state,
**characterized in that** said display controller (301) is further adapted to perform said causing to switch between first and second display states by
first causing said other of said first and second display areas (321, 322) to switch from said second display state to said first display state;
then maintaining, during a transition time period, both of said first and second display areas in said first display state, said transition time period being a function of a speed of said determined movement of said portable electronic apparatus (200; 300); and
finally, after said transition time period has lapsed, causing said one of said first and second display areas to switch from said first display state to said second display state.

2. A portable electronic apparatus according to claim 1, wherein said orientation sensor (310) comprises an accelerometer capable of sensing at least one of a static acceleration and a dynamic acceleration of said portable electronic apparatus (200; 300).

3. A portable electronic apparatus according to claim 1 or 2, further having a memory (330), said display controller (301) being configured to read from said memory a previous orientation (332) of said apparatus (200; 300), determine from said orientation sensor output signal (312) a current orientation of said apparatus, and selectively control said first display area (321) and said second display area (322) based on a difference between said previous orientation and said current orientation of said apparatus.

4. A portable electronic apparatus according to claim 1, wherein said display controller (301) is further adapted to compare the determined movement of said portable electronic apparatus (200; 300) to a threshold and to perform said causing to switch between first and second display states for said first and second display areas (321, 322) only if the determined movement exceeds said threshold.

5. A portable electronic apparatus according to any preceding claim, further comprising an image processor (340) associated with said display controller (301), said image processor being configured to investigate a captured image (700, 710; 800, 810) of a surrounding of said portable electronic apparatus (200; 300) for any presence in said captured image of an object (701, 711; 801-802, 811-814) of a certain kind, and to indicate such presence in an image processor output signal (343),
wherein said display controller is responsive also to said image processor output signal for the selective control of said first display area (321) and said second display area (322).

6. A portable electronic apparatus according to claim 5, wherein said certain kind of object is the face (701, 711; 801-802, 811-814) of one or more human individuals and wherein said image processor (340) is configured to execute a face detection algorithm in order to detect the presence of a user (1) of said portable electronic apparatus (200; 300).

7. A portable electronic apparatus according to claim 6 when dependent on claims 5 and 1, wherein said captured image (700, 710; 800, 810) contains a surrounding of said other of said first and second display areas (321, 322), and wherein said display controller (301) is configured, after the determining of a movement of said portable electronic apparatus (200; 300), to:
verify that said image processor (340) has detected a face in said captured image and thus indicates presence of said user (1) at said other of said first and second display areas, and
perform said causing of said other of said first and second display areas to switch from said second display state to said first display state, only upon an affirmative result from said verification by said image processor.

8. A portable electronic apparatus according to claim 6 when dependent on claims 5 and 1, wherein said display controller (301) is adapted, after having performed said causing to switch between first and second display states, to:
receive a sequence of captured images of said surrounding of said portable electronic apparatus (200; 300);
determine an angular change in the appearance of the face of said user (1), as detected in the sequence of captured images, and
control said other of said first and second display areas (321, 322) to switch from a first angular display mode to a second angular display mode.

9. A portable electronic apparatus according to any preceding claim, embodied as a mobile terminal (200).

10. A portable electronic apparatus according to claim 9, said mobile terminal (200) being a mobile telephone for a mobile telecommunications system (110).

11. A method of controlling a user interface of a portable electronic apparatus (200; 300) having first and second display areas (203, 213; 321, 322), the method involving
determining (400-406) a spatial orientation, or change in spatial orientation, of said apparatus (200; 300); and
selectively controlling (408-414) said first display area and said second display area in response to the determined spatial orientation, or change in spatial orientation, of said apparatus by:
maintaining one of said first and second display areas in a first display state, and another of said first and second display areas in a second state, said second display state being a state with less display activity than said first display state;
determining (406-410) a movement of said apparatus (200; 300) from the determined spatial orientation, or change in spatial orientation, of said apparatus; and, in response,
causing (414) said one of said first and second display areas to switch from said first display state to said second display state, and said other of said first and second display areas to switch from said second display state to said first display state,
wherein said causing to switch between first and second display states involves:
causing said other of said first and second display areas (321,322) to switch from said second display state to said first display state;
calculating a transition time period as a function of a speed of said determined movement of said portable electronic apparatus (200; 300);
maintaining, during said transition time period, both of said first and second display areas in said first display state; and
after said transition time period has lapsed, causing said one of said first and second display areas to switch from said first display state to said second display state.

12. A method according to claim 11,
wherein said determining involves:
determining (402) a current orientation of said apparatus (200; 300); and
reading (404) a stored previous orientation (332) of said apparatus, and
wherein said first display area and said second display area (321, 322) are selectively controlled (408-414) based on a difference (406) between said previous orientation and said current orientation of said apparatus.

13. A method according to claim 11, further involving comparing (408) the determined movement of said apparatus (200; 300) to a threshold and performing said causing (414) to switch between first and second display states for said first and second display areas (321, 322) only if the determined movement exceeds said threshold.

14. A method according to any one of claims 11 to 13, further involving:
receiving (420) a captured image (700, 710; 800; 810) of a surrounding of said portable electronic apparatus (200; 300); and
investigating (422-424) said captured image for any presence therein of an object (701, 711; 801-802, 811-814) of a certain kind,
wherein said first display area and said second display area (321, 322) are selectively controlled also based on a result of said investigating of said captured image.

15. A method according to claim 14, wherein said certain kind of object is the face (701, 711; 811-814) of one or more human individuals and wherein said investigating (422-424) of said captured image involves executing a face detection algorithm in order to detect the presence of a user (1) of said portable electronic apparatus.

16. A method according to claim 11, 14 and 15, the captured image (700, 710; 800; 810) containing a surrounding of said other of said first and second display areas (321, 322), wherein the method involves:
verifying (424), after the determining (406-410) of a movement of said portable electronic apparatus, that a face has been detected in said captured image and thus indicates presence of said user (1) at said other of said first and second display areas (321, 322), and
performing said causing (414) of said other of said first and second display areas to switch from said second display state to said first display state, only upon an affirmative result from said verifying.

17. A method according to claim 11, 14 and 15, further involving:
receiving, after said causing to switch between first and second display states, a sequence of captured images of said surrounding of said portable electronic apparatus (300);
executing said face detection algorithm to detect faces in said sequence of captured images;
determining an angular change in the appearance of the face of said user (1), as detected in the sequence of captured images, and
controlling said other of said first and second display areas (321, 322) to switch from a first angular display mode to a second angular display mode.

## Patentansprüche

1. Tragbare elektronische Vorrichtung (200; 300) mit ersten und zweiten Anzeigebereichen (203, 213; 321, 322), umfassend:
einen Orientierungssensor (310), der so konfiguriert ist, dass er ein Orientierungssensor-Ausgangssignal (312) bereitstellt, das eine räumliche Orientierung der Vorrichtung (200; 300) anzeigt; und
eine Anzeigesteuerung (301), die mit den ersten und zweiten Anzeigebereichen (321, 322) und dem Orientierungssensor gekoppelt ist, wobei die Anzeigesteuerung auf das Orientierungssensor-Ausgangssignal anspricht, um den ersten Anzeigebereich und den zweiten Anzeigebereich selektiv zu steuern durch:
Halten eines der ersten und zweiten Anzeigebereiche in einem ersten Anzeigezustand und eines anderen der ersten und zweiten Anzeigebereiche in einem zweiten Zustand, wobei der zweite Anzeigezustand ein Zustand mit weniger Anzeigeaktivität als der erste Anzeigezustand ist;
Bestimmen aus dem Orientierungssensor-Ausgangssignal (312) einer Bewegung der tragbaren elektronischen Vorrichtung (200; 300); und als Reaktion
Veranlassen, dass der eine der ersten und zweiten Anzeigebereiche vom ersten Anzeigezustand in den zweiten Anzeigezustand schaltet und der andere der ersten und zweiten Anzeigebereiche vom zweiten Anzeigezustand in den ersten Anzeigezustand schaltet;
**dadurch gekennzeichnet, dass** die Anzeigesteuerung (301) ferner so ausgelegt ist, dass sie das Veranlassen zum Schalten zwischen ersten und zweiten Anzeigezuständen durchführt durch:
Veranlassen zunächst, dass der andere der ersten und zweiten Anzeigebereiche (321, 322) vom zweiten Anzeigezustand in den ersten Anzeigezustand schaltet;
Halten anschließend während einer Übergangszeitperiode beider der ersten und zweiten Anzeigebereiche im ersten Anzeigezustand, wobei die Übergangszeitperiode eine Funktion einer Geschwindigkeit der bestimmten Bewegung der tragbaren elektronischen Vorrichtung (200; 300) ist; und
Veranlassen schließlich nach Ablauf der Übergangszeitperiode, dass der eine der ersten und zweiten Anzeigebereiche vom ersten Anzeigezustand in den zweiten Anzeigezustand schaltet.

2. Tragbare elektronische Vorrichtung nach Anspruch 1, wobei der Orientierungssensor (310) einen Beschleunigungsmesser umfasst, der zum Messen wenigstens einer von einer statischen Beschleunigung und einer dynamischen Beschleunigung der tragbaren elektronischen Vorrichtung (200; 300) imstande ist.

3. Tragbare elektronische Vorrichtung nach Anspruch 1 oder 2, ferner aufweisend einen Speicher (330), wobei die Anzeigesteuerung (301) so konfiguriert ist, dass sie aus dem Speicher eine vorherige Orientierung (332) der Vorrichtung (200; 300) ausliest, aus dem Orientierungssensor-Ausgangssignal (312) eine aktuelle Orientierung der Vorrichtung bestimmt, und den ersten Anzeigebereich (321) und den zweiten Anzeigebereich (322) auf der Basis der Differenz zwischen der vorherigen Orientierung und der aktuellen Orientierung der Vorrichtung selektiv steuert.

4. Tragbare elektronische Vorrichtung nach Anspruch 1, wobei die Anzeigesteuerung (301) ferner so ausgelegt ist, dass sie die bestimmte Bewegung der tragbaren elektronischen Vorrichtung (200; 300) mit einer Schwelle vergleicht und das Veranlassen zum Schalten zwischen ersten und zweiten Anzeigezuständen für die ersten und zweiten Anzeigebereiche (321, 322) nur dann durchführt, wenn die bestimmte Bewegung die Schwelle überschreitet.

5. Tragbare elektronische Vorrichtung nach einem der vorhergehenden Ansprüche, ferner umfassend einen Bildprozessor (340), der mit der Anzeigesteuerung (301) verbunden ist, wobei der Bildprozessor so konfiguriert ist, dass er ein aufgenommenes Bild (700, 710; 800, 810) einer Umgebung der tragbaren elektronischen Vorrichtung (200; 300) auf eine Gegenwart in dem aufgenommenen Bild eines Objekts (701, 710; 800, 810) einer bestimmten Art untersucht und solch eine Gegenwart in einem Bildprozessor-Ausgangssignal (343) anzeigt,
wobei die Anzeigesteuerung auch auf das Bildprozessor-Ausgangssignal zur selektiven Steuerung des ersten Anzeigebereichs (321) und des zweiten Anzeigebereichs (322) anspricht.

6. Tragbare elektronische Vorrichtung nach Anspruch 5, wobei die bestimmte Art von Objekt das Gesicht (701, 711; 801-802, 811-814) eines oder mehrerer menschlicher Individuen ist, und wobei der Bildprozessor (340) so konfiguriert ist, dass er einen Gesichtserkennungsalgorithmus ausführt, um die Gegenwart eines Benutzers (1) der tragbaren elektronischen Vorrichtung (200; 300) zu erkennen.

7. Tragbare elektronische Vorrichtung nach Anspruch 6, wenn von Anspruch 5 und 1 abhängig, wobei das aufgenommene Bild (700, 710; 800, 810) eine Umgebung des anderen der ersten und zweiten Anzeigebereiche (321, 322) enthält, und wobei die Anzeigesteuerung (301) so ausgelegt ist, dass sie nach dem Bestimmen einer Bewegung der tragbaren elektronischen Vorrichtung (200; 300) :
verifiziert, dass der Bildprozessor (340) ein Gesicht im aufgenommenen Bild erkannt hat und folglich die Gegenwart des Benutzers (1) in dem anderen der ersten und zweiten Anzeigebereiche anzeigt, und
das Veranlassen, dass der andere der ersten und zweiten Anzeigebereiche vom zweiten Anzeigezustand in den ersten Anzeigezustand schaltet, nur bei einem positiven Ergebnis aus der Verifizierung durch den Bildprozessor durchführt.

8. Tragbare elektronische Vorrichtung nach Anspruch 6, wenn von Anspruch 5 und 1 abhängig, wobei die Anzeigesteuerung (301) so ausgelegt ist, dass sie nach dem Durchführen des Veranlassens zum Schalten zwischen ersten und zweiten Anzeigezuständen:
eine Folge von aufgenommenen Bildern der Umgebung der der tragbaren elektronischen Vorrichtung (200; 300) empfängt;
eine Winkeländerung in der Erscheinung des Gesichts des Benutzers (1) bestimmt, wie in der Folge von aufgenommenen Bildern erkannt, und
den anderen der ersten und zweiten Anzeigebereiche (321, 322) so steuert, dass er von einem ersten Winkelanzeigemodus in einen zweiten Winkelanzeigemodus schaltet.

9. Tragbare elektronische Vorrichtung nach einem der vorhergehenden Ansprüche verwirklicht als ein mobiles Endgerät (200).

10. Tragbare elektronische Vorrichtung nach Anspruch 9, wobei das mobile Endgerät (200) ein Mobiltelefon für ein mobiles Telekommunikationssystem (110) ist.

11. Verfahren zum Steuern einer Benutzerschnittstelle einer tragbaren elektronischen Vorrichtung (200; 300) mit ersten und zweiten Anzeigebereichen (203, 213; 321, 322), wobei das Verfahren umfasst:
Bestimmen (400-406) einer räumlichen Orientierung oder Änderung in der räumlichen Orientierung der Vorrichtung (200; 300); und
selektives Steuern (408-414) des ersten Anzeigebereichs und des zweiten Anzeigebereichs als Reaktion auf die bestimmte räumliche Orientierung oder Änderung in der räumlichen Orientierung der Vorrichtung durch:
Halten eines der ersten und zweiten Anzeigebereiche in einem ersten Anzeigezustand und eines anderen der ersten und zweiten Anzeigebereiche in einem zweiten Zustand, wobei der zweite Anzeigezustand ein Zustand mit weniger Anzeigeaktivität als der erste Anzeigezustand ist;
Bestimmen (406-410) einer Bewegung der Vorrichtung (200, 300) aus der bestimmten räumlichen Orientierung oder Änderung in der räumlichen Orientierung der Vorrichtung; und als Reaktion
Veranlassen (414), dass der eine der ersten und zweiten Anzeigebereiche vom ersten Anzeigezustand in den zweiten Anzeigezustand schaltet und der andere der ersten und zweiten Anzeigebereiche vom zweiten Anzeigezustand in den ersten Anzeigezustand schaltet,
wobei das Veranlassen zum Schalten zwischen den ersten und zweiten Anzeigezuständen umfasst:
Veranlassen, dass der andere der ersten und zweiten Anzeigebereiche (321, 322) vom zweiten Anzeigezustand in den ersten Anzeigezustand schaltet;
Berechnen einer Übergangszeitperiode als eine Funktion einer Geschwindigkeit der bestimmten Bewegung der tragbaren elektronischen Vorrichtung (200; 300);
Halten während der Übergangszeitperiode beider der ersten und zweiten Anzeigebereiche im ersten Anzeigezustand; und
Veranlassen nach Ablauf der Übergangszeitperiode, dass der eine der ersten und zweiten Anzeigebereiche vom ersten Anzeigezustand in den zweiten Anzeigezustand schaltet.

12. Verfahren nach Anspruch 11:
wobei das Bestimmen umfasst:
Bestimmen (402) einer aktuellen Orientierung der Vorrichtung (200; 300); und
Auslesen (404) einer vorherigen Orientierung (332) der Vorrichtung, und
wobei der erste Anzeigebereich und der zweite Anzeigebereich (321, 322) auf der Basis einer Differenz (406) zwischen der vorherigen Orientierung und der aktuellen Orientierung der Vorrichtung selektiv gesteuert werden (408-414).

13. Verfahren nach Anspruch 11, ferner umfassend ein Vergleichen der bestimmten Bewegung der Vorrichtung (200; 300) mit einer Schwelle und Durchführen des Veranlassens (414) zum Schalten zwischen ersten und zweiten Anzeigezuständen für die ersten und zweiten Anzeigebereiche (321, 322) nur dann, wenn die bestimmte Bewegung die Schwelle überschreitet.

14. Verfahren nach einem der Ansprüche 11 bis 13, ferner umfassend:
Empfangen (420) eines aufgenommenen Bildes (700, 710; 800; 810) einer Umgebung der tragbaren elektronischen Vorrichtung (200; 300);
Untersuchen (422-424) des aufgenommenen Bildes auf eine Gegenwart darauf eines Objekts (701, 711; 801-802, 811-814) einer bestimmten Art,
wobei der erste Anzeigebereich und der zweite Anzeigebereich (321, 322) auch auf der Basis eines Ergebnisses der Untersuchung des aufgenommenen Bildes selektiv gesteuert werden.

15. Verfahren nach Anspruch 14, wobei es sich bei der bestimmten Art von Objekt um das Gesicht (701, 711; 801-802, 811-814) eines oder mehrerer menschlicher Individuen handelt, und wobei das Untersuchen (422-424) des aufgenommenen Bildes ein Ausführen eines Gesichtserkennungsalgorithmus umfasst, um die Gegenwart eines Benutzers (1) der tragbaren elektronischen Vorrichtung zu erkennen.

16. Verfahren nach Anspruch 11, 14 und 15, wobei das aufgenommene Bild (700, 710; 800; 810) eine Umgebung des anderen der ersten und zweiten Anzeigebereiche (321, 322) enthält, und das Verfahren umfasst:
Verifizieren (424) nach dem Bestimmen (406-410) einer Bewegung der tragbaren elektronischen Vorrichtung, dass ein Gesicht auf dem aufgenommenen Bild erkannt wurde und folglich die Gegenwart des Benutzers (1) im anderen der ersten und zweiten Anzeigebereiche (321, 322) anzeigt, und
Durchführen des Veranlassens (414), dass der andere der ersten und zweiten Anzeigebereiche vom zweiten Anzeigezustand in den ersten Anzeigezustand schaltet, nur bei einem positiven Ergebnis aus der Verifizierung.

17. Verfahren nach Anspruch 11, 14 und 15, ferner umfassend:
Empfangen nach dem Veranlassen zum Schalten zwischen ersten und zweiten Anzeigezuständen einer Folge von aufgenommenen Bildern der Umgebung der der tragbaren elektronischen Vorrichtung (300);
Ausführen des Gesichtserkennungsalgorithmus, um Gesichter in der Folge von aufgenommenen Bildern zu erkennen;
Bestimmen einer Winkeländerung in der Erscheinung des Gesichts des Benutzers (1) , wie in der Folge von aufgenommenen Bildern erkannt, und
derartiges Steuern des anderen der ersten und zweiten Anzeigebereiche (321, 322), dass er von einem ersten Winkelanzeigemodus in einen zweiten Winkelanzeigemodus schaltet.

## Revendications

1. Appareil électronique portable (200 ;300) comportant une première et une seconde zones d'affichage (203,213 ;321,322) comprenant
un capteur d'orientation (310) configuré afin de fournir un signal de sortie de capteur d'orientation (312) indicateur d'une orientation spatiale dudit appareil (200 ;300) ; et
un contrôleur d'affichage (301à) couplé auxdites première et seconde zones d'affichage (321,322) et audit capteur d'orientation, ledit contrôleur d'affichage répondant audit signal de sortie de capteur d'orientation afin de contrôler sélectivement ladite première zone d'affichage et ladite seconde zone d'affichage en :
conservant une desdites première et seconde zones d'affichage dans un premier état d'affichage, et une autre desdites première et seconde zones d'affichage dans un second état, ledit second état d'affichage étant en état avec moins d'activité d'affichage que ledit premier état d'affichage ;
déterminant, d'après ledit signal de sortie de capteur d'orientation (312), un mouvement dudit appareil électronique portable (200,300) ; et, en réponse,
amenant ladite une desdites première et seconde zones d'affichage à commuter dudit premier état d'affichage audit second état d'affichage, et ladite autre desdites première et seconde zones d'affichage à commuter dudit second état d'affichage audit premier état d'affichage,
**caractérisé en ce que** ledit contrôleur d'affichage (301) est en outre adapté afin d'exécuter ledit fait d'amener à commuter entre lesdits premier et second états d'affichages en
amenant d'abord ladite autre desdites première et seconde zones d'affichage (321,322) à commuter dudit second état d'affichage audit premier état d'affichage ;
ensuite en maintenant, pendant une période temporelle de transition, les deux desdites première et seconde zones d'affichage dans ledit premier état d'affichage, ladite période temporelle de transition étant une fonction d'une vitesse dudit mouvement déterminé dudit appareil électronique portable (200,300) ; et
enfin, après que ladite période temporelle de transition s'est écoulée, en amenant ladite une desdites première et seconde zones d'affichage à commuter dudit premier état d'affichage audit second état d'affichage.

2. Appareil électronique portable selon la revendication 1, dans lequel ledit capteur d'orientation (310) comprend un accéléromètre en mesure de détecter au moins une d'une accélération statique et d'une accélération dynamique dudit appareil «électronique portable (200 ; 300) .

3. Appareil électronique portable selon la revendication 1 ou 2, comportant en outre une mémoire (330), ledit contrôleur d'affichage (301) étant configuré afin de lire dans ladite mémoire une orientation précédente (332) dudit appareil (200 ;300), déterminer d'après ledit signal de sortie de capteur d'orientation (312) une orientation actuelle dudit appareil, et commander sélectivement ladite première zone d'affichage (321) et ladite seconde zone d'affichage (322) sur la base d'une différence ente ladite orientation précédente et ladite orientation actuelle dudit appareil.

4. Appareil électronique portable selon la revendication 1, dans lequel ledit contrôleur d'affichage (301) est en outre adapté afin de comparer le mouvement déterminé dudit appareil électronique portable (200 ;300) avec un seuil et d'exécuter ledit fait d'amener à commuter entre un premier et un second états d'affichage pour lesdites première et seconde zones d'affichage (321,322) seulement si le mouvement déterminé excède ledit seuil.

5. Appareil électronique portable selon une quelconque des revendications précédentes, comprenant en outre un processeur d'image (340) associé audit contrôleur d'affichage (301), ledit processeur d'image étant configuré afin d'examiner une image capturée (700,710 ;800,810) d'un environnement dudit appareil électronique portable (200 ;300) afin de rechercher n'importe quelle présence dans ladite image capturée d'un objet (701,711 ;801-802,811-814) d'un certain type, et d'indiquer une telle présence dans un signal de sortie de processeur d'image (343),
dans lequel ledit contrôleur d'affichage répond aussi audit signal de sortie de processeur d'image en vue du contrôle sélectif de ladite première zone d'affichage (321) et de ladite seconde zone d'affichage (322).

6. Appareil électronique portable selon la revendication 5, dans lequel ledit certain type d'objet est le visage (701, 711 ; 801-802,811-814) d'un ou plusieurs individus humains et dans lequel ledit processeur d'image (340) est configuré afin d'exécuter un algorithme de détection d'image afin de détecter la présence d'un utilisateur (1) dudit appareil électronique portable (200 ;300).

7. Appareil électronique portable selon la revendication 6 en dépendance des revendications 5 et 1, dans lequel ladite image capturée (700,710 ;800,810) contient un environnement de ladite autre desdites première et seconde zones d'affichage (321,322), et dans lequel ledit contrôleur d'affichage (301) est configuré, après la détermination d'un mouvement dudit appareil électronique portable (200 ;300), afin de :
vérifier que ledit processeur d'image (340) a détecté un visage dans ladite image capturée et indique ainsi la présence dudit utilisateur (1) à ladite autre desdites première et seconde zones d'affichage, et
exécuter ledit fait d'amener ladite autre desdites première et seconde zones d'affichage à commuter dudit second état d'affichage audit premier état d'affichage, seulement en présence d'un résultat affirmatif de ladite vérification par ledit processeur d'image.

8. Appareil électronique portable selon la revendication 6 en dépendance des revendications 5 et 1, dans lequel ledit contrôleur d'affichage (301) est adapté, après avoir exécuté ledit fait d'amener à commuter entre un premier et un second états d'affichage, à :
recevoir un séquence d'images capturées dudit environnement dudit appareil électronique portable (200 ;300) ;
déterminer une variation angulaire de l'apparence du visage dudit utilisateur (1), comme détecté dans la séquence d'images capturées, et
contrôler ladite autre desdites première et seconde zones d'affichage (321,322) afin de commuter d'un premier mode d'affichage angulaire à un second mode d'affichage angulaire.

9. Appareil électronique portable selon une quelconque des revendications précédentes, conçu sous la forme d'un terminal mobile (200).

10. Appareil électronique portable selon la revendication 9, ledit terminal mobile (200) étant un téléphone mobile pour système de télécommunication mobile (110) ;

11. Procédé de contrôle d'une interface d'utilisateur d'un appareil électronique portable (200 ;300) comportant une première et une seconde zones d'affichage (202,213 ;321,322), le procédé impliquant de déterminer (400-406) une orientation spatiale, ou une variation d'orientation spatiale dudit appareil (200 ; 300) ; et
contrôler sélectivement (408-414) ladite première zone d'affichage et ladite seconde zone d'affichage en réponse à l'orientation spatiale déterminée, ou variation d'orientation spatiale, dudit appareil en :
conservant une desdites première et seconde zones d'affichage dans un premier état d'affichage, et une autre desdites première et seconde zones d'affichage dans un second état, ledit second état d'affichage étant un état avec moins d'activité d'affichage que ledit premier état d'affichage ;
déterminant (406-410) un mouvement dudit appareil (200 ;300) d'après l'orientation spatiale déterminée, ou variation d'orientation spatiale, dudit appareil ; et, en réponse,
amenant (414) ladite une desdites première et seconde zones d'affichage à commuter dudit premier état d'affichage audit second état d'affichage, et ladite autre desdites première et seconde zones d'affichage à commuter dudit second état d'affichage audit premier état d'affichage,
dans lequel ledit fait d'amener à commuter entre un premier et un second état d'affichage implique de :
amener ladite autre desdites première et seconde zones d'affichage (321,322) à commuter dudit second état d'affichage audit premier état d'affichage ;
calculer une période temporelle de transition comme une fonction d'une vitesse dudit mouvement déterminé dudit appareil électronique portable (200 ;300) ;
conserver, pendant ladite période temporelle de transition, les deux desdits première et seconde zones d'affichage dans ledit premier état d'affichage ; et
après que ladite période temporelle de transition s'est écoulée, amener ladite une desdites première et seconde zones d'affichage à commuter dudit premier état d'affichage audit second état d'affichage.

12. Procédé selon la revendication 11, dans ladite détermination implique de :
déterminer (402) une orientation actuelle dudit appareil (200 ;300) ; et
lire (404) une orientation précédemment mémorisée (332) dudit appareil, et
dans lequel ladite première zone d'affichage et ladite seconde zone d'affichage (321,322) sont contrôlées sélectivement (408-414) sur la base d'une différence (406) entre ladite orientation précédente et ladite orientation actuelle dudit appareil.

13. Procédé selon la revendication 11, impliquant en outre de comparer (408) le mouvement déterminé dudit appareil (200 ;300) avec un seuil et d'exécuter ledit fait (414) de commuter entre un premier et un second états d'affichage pour lesdites première et seconde zones d'affichage (321,322) seulement si le mouvement déterminé excède ledit seuil.

14. Procédé selon une quelconque des revendications 11 à 13, impliquant en outre de :
recevoir (420) une image capturée (700,710 ;800,810) d'un environnement dudit appareil électronique portable (200 ;300), et
examiner (422-424) ladite image capturée afin de rechercher n'importe quelle présence dans celle-ci d'un objet (701,711 ;801-802,811,814) d'un certain type,
dans lequel ladite première zone d'affichage et ladite seconde zone d'affichage (321,322) sont contrôlées sélectivement également sur la base d'un résultat dudit examen de ladite image capturée.

15. Procédé selon la revendication 14, dans lequel ledit certain type d'objet est le visage (701,711 ;811-814) d'un ou plusieurs individus humains et dans lequel ledit examen (422-424) de ladite image capturée implique d'exécuter un algorithme de détection de visage afin de détecter la présence d'un utilisateur (1) dudit appareil électronique portable.

16. Procédé selon la revendication 11,14 et 15, l'image capturée (700,710 ;800,810) contenant un environnement de ladite autre desdites première et seconde zones d'affichage (321,322), dans lequel le procédé implique de :
vérifier (424), après la détermination (406-410) d'un mouvement dudit appareil électronique portable, qu'un visage a été détecté dans ladite image capturée et indique ainsi la présence dudit utilisateur (1) au niveau de ladite autre desdites première et seconde zones d'affichage (321,322), et
exécuter ledit fait d'amener (414) ladite autre desdites première et seconde zones d'affichage à commuter dudit second état d'affichage audit premier état d'affichage, seulement en présence d'un résultat affirmatif de ladite vérification.

17. Procédé selon la revendication 11,14 et 15, impliquant en outre de :
recevoir, après ledit fait d'amener à commuter entre un premier et un second états d'affichage, une séquence d'images capturées dudit environnement dudit appareil électronique portable (300) ;
exécuter ledit algorithme de détection de visage afin de détecter des visages dans ladite séquence d'images capturées ;
déterminer une variation angulaire de l'apparence du visage dudit utilisateur (1), comme détecté dans la séquence d'images capturées, et
contrôler ladite autre desdites première et seconde zones d'affichage (321,322) afin de commuter d'un premier mode d'affichage angulaire à un second mode d'affichage angulaire.
